Europäisches Patentamt

European Patent Office

Office européen des brevets

(11) Publication number: **0 481 372 A2**

# EUROPEAN PATENT APPLICATION

(21) Application number: **91117392.0**

(22) Date of filing: **11.10.91**

(51) Int. Cl.⁵: **C08F 259/08**, C08L 51/04,
//(C08F259/08,220:00)

(30) Priority: **13.10.90 JP 274215/90**

(43) Date of publication of application:
**22.04.92 Bulletin 92/17**

(84) Designated Contracting States:
**DE FR GB IT**

(71) Applicant: **DAIKIN INDUSTRIES, LIMITED**
**Umeda Center Building, 4-12, Nakazaki-nishi**
**2-chome Kita-ku**
**Osaka-shi Osaka 530(JP)**

(72) Inventor: **Noguchi, Tsuyoshi, c/o Daikin**
**Industries, Ltd.**
**1-1 Nishi Hitotsuya**
**Settsu-shi, Osaka-fu(JP)**
Inventor: **Matsumoto, Kazuhisa, c/o Daikin**
**Industries, Ltd.**
**1-1 Nishi Hitotsuya**
**Settsu-shi, Osaka-fu(JP)**
Inventor: **Sakaguchi, Kohsaku, c/o Daikin**
**Industries, Ltd.**
**1-1 Nishi Hitotsuya**
**Settsu-shi, Osaka-fu(JP)**
Inventor: **Masutani, Tetsuya, c/o Daikin**
**Industries, Ltd.**
**1-1 Nishi Hitotsuya**
**Settsu-shi, Osaka-fu(JP)**
Inventor: **Shirai, Yoshihiro, c/o Daikin**
**Industries, Ltd.**
**1-1 Nishi Hitotsuya**
**Settsu-shi, Osaka-fu(JP)**
Inventor: **Minamino, Etsuo, c/o Daikin**
**Industries, Ltd.**
**1-1 Nishi Hitotsuya**
**Settsu-shi, Osaka-fu(JP)**

(74) Representative: **Barz, Peter, Dr. et al**
**Patentanwälte Dipl.-Ing. G. Dannenberg Dr.**
**P. Weinhold, Dr. D. Gudel Dipl.-Ing. S.**
**Schubert, Dr. P. Barz Siegfriedstrasse 8**
**W-8000 München 40(DE)**

(54) **Crosslinkable composition.**

㊷ The present invention provides a crosslinkable composition characterized in that the composition comprises 100 parts by weight of a polymer, 0.1 to 100 parts by weight of a filler and 0.1 to 10 parts by weight of a crosslinking agent, the polymer being obtained by dissolving or swelling an amorphous fluorine-containing polymer in an acrylic monomer and subsequently polymerizing the monomer into a high polymer.

The present invention relates to crosslinkable composition.

Amorphous vinylidene fluoride copolymers and like fluorine-containing polymers have high resistance to heat, chemicals, oils and solvents and are therefore in wider use in recent years, for example, as materials for gaskets, seals, partitions and hoses. However, fluorine-containing polymers have problems in low-temperature characteristics. For example, they are generally unusable below a limit temperature of about -20 °C, fail to exhibit rubber elasticity at lower temperatures and accordingly have the drawback of finding limited use. They are disadvantageous to use for some applications because they have a higher specific gravity than other rubbers.

On the other hand, acrylic elastomers are excellent in oil resistance but have the drawback of low heat resistance at high temperatures exceeding 150 °C.

While it has been proposed to blend a fluorine-containing polymer and an acrylic elastomer for the two components to mutually offset their drawbacks, such compositions are prepared by mechanically kneading the components together with rolls or the like. However, the two components are difficult to finely and uniformly disperse in each other thoroughly by this method. Further when heated for vulcanization, the composition separates into different phases to exhibit a lower degree of dispersion. The composition therefore has the problem of failing to exhibit the desired properties.

An object of the present invention is to uniformly disperse a fluorine-containing polymer and an acrylic elastomer in each other and to provide a crosslinkable composition wherein the characteristics of these elestomers are utilized and which has high resistance to oils and solvents, improved heat resistance and improved low-temperature characteristics.

The above and other objects of the invention will become apparent from the following description.

The present invention provides a crosslinkable composition characterized in that the composition comprises 100 parts by weight of a polymer, 0.1 to 100 parts by weight of a filler and 0.1 to 10 parts by weight of a crosslinking agent, the polymer being obtained by dissolving or swelling an amorphous fluorine-containing polymer in an acrylic monomer and subsequently polymerizing the monomer into a high polymer.

We have conducted intensive research to uniformly disperse a fluorine-containing polymer and an acrylic elastomer in each other and to permit the dispersion to retain satisfactory compatibility even when the dispersion is heat-treated for vulcanization, and consequently found that the object can be fulfilled by admixing a filler and a crosslinking agent with a polymer which is obtained by dissolving or swelling a fluorine-containing polymer in an acrylic monomer and thereafter polymerizing the acrylic monomer.

Examples of amorphous fluorine-containing polymers which can be dissolved or swollen in acrylic monomers for use in the present invention are vinylidene fluoride/hexafluoropropylene, vinylidene fluoride/tetrafluoroethylene/hexafluoropropylene, vinylidene fluoride/chlorotrifluoroethylene and like vinylidene fluoride copolymers, tetrafluoroethylene/propylene, hexafluoropropylene/ethylene and fluoro(alkyl vinyl ether) (including those having a multiplicity of ether bonds)/olefin copolymers, fluorosilicone rubber, fluorophosphazene rubber, etc. Preferable among these are vinylidene fluoride/hexafluoropropylene, vinylidene fluoride/tetrafluoroethylene/hexafluoropropylene and vinylidene fluoride/chlorotrifluoroethylene polymers.

The term "amorphous" as used herein refers to elastomers the melting point of which is not observable substantially at the peak of DSC (Differential Scanning Colorimeter).

Acrylic monomers for use in the present invention are not limited and include mono- and poly-functional monomers. Such monomers are used singly, or at least two of them are used in combination. Preferably, polyfunctional monomers are used in a small amount in combination with a monofunctional monomer. Examples of preferred monomers are methyl methacrylate (MMA), ethyl methacrylate (EMA), butyl methacrylate (BMA), 2-hydroxyethyl methacrylate (HEMA), glycidyl methacrylate (GMA), 2-methoxyethyl methacrylate (MEMA), 3-(trimethoxysilyl)propyl methacrylate (MSPM), 2-(phenylphosphoryl)ethyl methacrylate (phenyl-P), 2-hydroxy-3-($\beta$-naphthoxy)propyl methacrylate (HNPM), N-phenyl-N-(2-hydroxy-3-methacryloxy)propylglycine (NPG-GMA), ethylene glycol dimethacrylate (EDMA or 1G), diethylene glycol dimethacrylate (DiEDMA or 2G), triethylene glycol dimethacrylate (TriEDMA or 3G), tetraethylene glycol dimethacrylate (TEDMA or 4G), 1,4-butanediol dimethacrylate (1,4-BuDMA), 1,3-butanediol dimethacrylate-(1,3-BuDMA), 2,2-bis[4-(2-hydroxy-3-methacryloxypropoxy)phenyl]propane (Bis-GMA), 2,2-bis(4-methacryloxyphenyl)propane (BPDMA), 2,2-bis(4-methacryloxyethoxyphenyl)propane (Bis-MEPP), 2,2-bis(4-methacryloxypolyethoxyphenyl)propane (Bis-MPEPP), di(methacryloxyethyl)-trimethylhexamethylenediurethane (UDMA), trimethylolpropanetrimethacrylate (TMPT),

$CH_2 = C(CH_3)COOCH_2 CF_3$ (3FMA),

$CH_2 = C(CH_3)COOCH_2 CF_2 CF_2 H$ (4FMA),

$CH_2 = C(CH_3)COOCH_2 CF_2 CF_3$ (5FMA),

$CH_2 = C(CH_3)COOCH_2 (CF_2)_2 CF_3$ (7FMA),

$CH_2 = C(CH_3)COOCH_2 (CF_2)_3 CF_2 H$ (8FMA),

acrylates and $\alpha$ -fluoroacrylates corresponding to such compounds.

Examples of $\alpha$ -fluoroacrylates are

$CH_2 = CFCOOCH_2 CF_2 CF_2 H$ (4FFA),

$CH_2 = CFCOOCH_2 CF_2 CF_3$ (5FFA),

$CH_2 = CFCOOCH_2 (CF_2)_3 CF_2 H$ (8FFA) and

$CH_2 = CFCOOCH_2 (CF_2)_5 CF_2 H$ (12FFA).

To modify the monomer, the monomer may have admixed therewith a small amount of acrylonitrile, 2-chloroethyl vinyl ether, vinyl monochloroacetate, methylvinyldichlorosilane or the like. When the polyfunctional monomer is to be used, it is suitable to use the polyfunctional monomer in an amount of 1 to 20 parts (by weight, the same as hereinafter) per 100 parts by weight of the monofunctional monomer.

The proportions of the amorphous fluorine-containing polymer and the acrylic monomer to be used in the present invention can be determined suitably. It is generally desirable to use 5 to 1000 parts of the latter per 100 parts of the former.

According to the present invention, the fluorine-containing polymer is dissolved or swollen in the acrylic monomer, which is then polymerized into a high polymer for use in preparing a crosslinkable composition. The polymerization is conducted in the presence of a polymerization initiator. A polymerization inhibitor, reducing agent, transfer agent, etc. can be added to the polymerization system. Examples of useful polymerization initiators are light, heat, benzoyl peroxide, azoisobutyronitrile (AIBN), camphorquinone (CQ), 9-fluorenone, tributylborane (TBB), benzophenone and the like. Examples of useful reducing agents are dimethylaminoethyl methacrylate (DMAEMA), dimethyl-p-toluidine (DMPT) and the like. Examples of useful polymerization inhibitors are hydroquinone, hydroquinone methyl ester and the like. Examples of useful transfer agents include lauryl mercaptan.

Crosslinking of the composition of the invention or use of the polyfunctional acrylic monomer forms an IPN (interpenetrating polymer network). IPN is a polymer obtained by mixing two linear polymers together each in the form of a liquid (or solution) and crosslinking one or both of the polymers to interlock the respective molecular chains. When IPN is to be formed according to the invention, the following method is usually employed. A monomer for forming a guest polymer is injected into the high polymer formed. Alternatively, the polymer is immersed in or injected into a solution containing the monomer. The mixture is then polymerized by heating, irradiation with light or like procedure, a filler, crosslinking agent, etc. are admixed with the resulting polymer, and the mixture is crosslinked. Other methods are also usable.

Examples of fillers useful for the present invention are carbon black, silica, clay, kieselguhr, talc, calcium carbonate and like reinforcing agents. The filler is used preferably in an amount of 0.1 to 100 parts per 100 parts of the polymer. If the amount is less than 0.1 part, an insufficient reinforcing effect will result, whereas if the amount is over 100 parts, the composition fails to exhibit rubberlike properties. Examples of crosslinking agents useful for the invention are those for use in crosslinking vinylidene fluoride-containing rubbers, such as peroxides, polyols and polyamines. More specific examples are Perhexa 2.5B (peroxide manufactured by Nippon Oils & Fats Co., Ltd.), triallyl isocyanurate (TAIC) bisphenol AF, N,N'-dicinnamylidene-1,6-hexadiamine, etc. The crosslinking agent is used preferably in an amount of 0.1 to 10 parts per 100 parts of the polymer. If the amount is less than 0.1 part, the degree of crosslinking achieved is insufficient, whereas if the amount is in excess of 10 parts, the composition is unlikely to exhibit rubberlike properties. When required, also usable are nitrogen- or phosphorus- containing organic tertiary or quaternary compounds as crosslinking accelerators, oxides or hydroxides of bivalent metals as an acid-acceptor, and compounds containing a plurality of vinyl or allyl groups and serving as auxiliary crosslinking agents. Further usable as required are antioxidants, processing assisting agents, scorch retarders, antiozonants, ultraviolet absorbers, flame retardants, plasticizers and other additives.

The crosslinking composition provided by the present invention is applicable to uses which are not limited specifically. However, the present composition, which has resistance to heat, oils and chemicals, is useful as a material for packings and gaskets. It is useful in industries, for example, for O-rings, tubes, valves, bellows, belts, vibration-proof damping rubber members, flexible hoses, linings, etc. More specifically, the present composition is useful, for example, for hoses for power steering oil, oil coolers, brake oil and fuels; hard disk gaskets; O-rings for sealing off engine oil, transmission oil and oils for power steering systems and brake systems; building gaskets for window frames and curtain walls; vibration-proof damping rubber members for engine mounts, torsional dampers, frames and exhaust pipes; coverings for electric wires and cables; etc.

The composition of the invention has a slightly higher viscosity than usual simple blended rubber materials, so that when comprising a peroxide which is decomposable at a low temperature (50 to 130 °C ) and a polyfunctional compound (as crosslinking agents), the composition is applicable in situ for providing packings or gaskets and can be vulcanized by being subjected to a hot-air atmosphere of 60 to 150 °C.

Examples and Comparative Examples are given below. In these examples, the parts and percentages are all by weight.

Examples 1 to 10

A fluorine-containing polymer and an acrylic monomer solution in the proportions listed in Table 1 were subjected to photopolymelization under the following conditions.

With reference to the table, G801 stands for Dai-el G801 which is a fluorine-containing polymer, i.e., a copolymerized fluorine-containing rubber comprising the two components of iodine-containing vinylidene fluoride (2F) and hexafluoropropylene (6F), and G704 for Dai-el G704 which is a fluorine-containing polymer, i.e., a copolymerized fluorine-containing rubber comprising the two components of iodine-free 2F and 6F. G902 stands for Dai-el G902 which is a fluorine-containing polymer, i.e., a copolymerized fluorine-containing rubber comprising the three components of 2F, 6F and tetrafluoroethylene (4F). nBuAc stands for n-butyl acrylate, EAc for ethyl acrylate, 3FA for $CH_2 = CHCOOCH_2CF_3$, 1G for ethylene glycol dimethacrylate and 4G for tetraethylene glycol dimethacrylate. When 70 g of a fluorine-containing polymer for use in the invention, e.g., G801, in the form of 5-mm cubes was mixed with 30 g of nBuAc/1,6-HXA (9:1 in polymerization ratio) having a polymerization initiator uniformly dissolved therein, followed by standing overnight at 40 °C, a uniform solution was prepared.

Photopolymerization conditions

To 1 g of the acrylic monomer were added CQ and DMAEMA, each in an amount of 5 mg, and the mixture was sandwiched between two glass plates with 2-mm-thick spacers interposed between the plates and polymerized using a visible light irradiator, α -Light, product of Morita Co., Ltd. The irradiation time was 10 to 30 minutes in accordance with the proportion of the fluorine-containing polymer used.

A filler was kneaded with the polymer obtained in the ratio given in Table 2 using oven rolls, and the mixture was subjected to primary vulcanization at 160 °C for 15 minutes and secondary vulcanization at 180 °C for 4 hours. With reference to Table 2, TAIC stands for triallyl isocyanurate, 2.5B for Perhexa 2.5B, a peroxide manufactured by Nippon Oils & Fats Co., Ltd., and Naugard 445 for an antioxidant manufatured by Uniroyal Chemical Co., Ltd. The vulcanization conditions A and B listed are as follows.

A: at 160 °C for 15 min and then at 180 °C for 4 hours

B: at 170 °C for 10 min and then at 200 °C for 24 hours

The crosslinking reaction of the composition was checked by a JSR-type Curelasto Meter (product of Imanaka Kikai Kogyo Co., Ltd.). The properties of the crosslinked rubber were determined according to JIS K6301. Table 3 shows the results.

Comparative Examples 1 and 2

A fluorine-containing polymer and an acrylic elastomer in the proportions listed in Table 4 were kneaded together along with other additives listed in Table 5 using oven rolls. The acrylic elastomer used was RV-1220, product of Nisshin Kagaku Co., Ltd., which can be vulcanized by means of a metal soap and sulfur. The kneaded mixture was subjected to primary vulcanization at 170 °C for 20 minutes and then to secondary vulcanization at 180 °C for 4 hours and thereby crosslinked. Table 6 shows the characteristics of the product. Seast 116 in the table is carbon black of the MAF type, product of Tokai Carbon Co., Ltd.

Table 1

| | Example | | | | | | | | | |
|---|---|---|---|---|---|---|---|---|---|---|
| | 1 | 2 | 3 | 4 | 5 | 6 | 7 | 8 | 9 | 10 |
| Dai-el G801 | 70 | 70 | 70 | 70 | 60 | 80 | 70 | 70 | | |
| Dai-el G704 | - | - | - | - | - | - | - | - | - | 70 |
| Dai-el G902 | - | - | - | - | - | - | - | - | 80 | - |
| EAc | | | | | | 5.4 | | | | |
| nBuAc | 27.1 | 28.5 | 27 | | | 18 | 21.6 | 27 | 18 | 27 |
| 3FA | | | | 29.7 | 39.6 | | | | | |
| 1G | 0.9 | 1.5 | 3 | 0.3 | 0.4 | 2 | 3 | | 2 | 3 |
| 4G | | | | | | | | 3 | | |

Table 2

| | Example | | | | | | | | | |
|---|---|---|---|---|---|---|---|---|---|---|
| | 1 | 2 | 3 | 4 | 5 | 6 | 7 | 8 | 9 | 10 |
| Polymer | 100 | 100 | 100 | 100 | 100 | 100 | 100 | 100 | 100 | 100 |
| MT Carbon | 20 | 20 | 20 | 20 | 20 | 20 | 20 | 20 | 20 | 20 |
| TAIC | 4 | 4 | 4 | 4 | 4 | 4 | 4 | 4 | 4 | — |
| 2.5B | 1.5 | 1.5 | 1.5 | 1.5 | 1.5 | 1.5 | 1.5 | 1.5 | 1.5 | — |
| Naugard 445 | 0.5 | 0.5 | 0.5 | 0.5 | 0.5 | 0.5 | 0.5 | 0.5 | 0.5 | 1 |
| MgO | — | — | — | — | — | — | — | — | — | 3 |
| Ca(OH)$_2$ | — | — | — | — | — | — | — | — | — | 6 |
| vulcanization condition | A | A | A | A | A | A | A | A | A | B |

EP 0 481 372 A2

Table 3

| | Example | | | | | | | | | |
|---|---|---|---|---|---|---|---|---|---|---|
| | 1 | 2 | 3 | 4 | 5 | 6 | 7 | 8 | 9 | 10 |
| **vulcanization properties** | | | | | | | | | | |
| Max. viscosity (kgf) | 2.1 | 2.21 | 2.1 | 1.18 | 1.2 | 4.3 | 3.33 | 3.5 | 4.53 | 5.75 |
| Min. viscosity (kgf) | 0.2 | 0.29 | 0.38 | 0.13 | 0.1 | 0.33 | 0.45 | 0.38 | 0.32 | 0.35 |
| Induction time (min) | 1.5 | 1.6 | 2.2 | 1.9 | 1.9 | 2.1 | 2.5 | 1.9 | 1.7 | 0.3 |
| vulcan. time (min) | 7.6 | 7.8 | 7.1 | 5.2 | 6.2 | 8.0 | 10.5 | 8.2 | 5.4 | 2.3 |
| Tensile strength (kgf/cm$^2$) | 92.5 | 114 | 111 | 95.3 | 72.7 | 142 | 118 | 104 | 136 | 86.4 |
| Elongation (%) | 324 | 245 | 328 | 621 | 660 | 253 | 401 | 226 | 155 | 100 |
| Hardness (JIS A) | 64 | 74 | 72 | 60 | 58 | 70 | 66 | 68 | 73 | 62 |
| Specific gravity | 1.56 | 1.56 | 1.55 | 1.71 | 1.69 | 1.62 | 1.55 | 1.56 | 1.68 | 1.58 |
| Change in hardness by heating in air (175 °C, 1000 hr) | +15 | +15 | +14 | +10 | +11 | +12 | +11 | +17 | +8 | +17 |
| Torsion test at low temperature $T_{10}$ (°C) | -21 | -18 | -18 | -17 | -18 | -18 | -12 | -19 | -7 | -14 |
| Permanent set (150 °C, 70 hr) | 15.5 | 14.2 | 14.2 | — | — | 14.2 | 20.0 | 16.0 | 8.3 | 13.7 |

Table 4

| | Comparative Example | |
|---|---|---|
| | 1 | 2 |
| Dai-el G704 | 70 | |
| Dai-el G801 | | 70 |
| RV-1220 | 30 | 30 |

Table 5

| | Comparative Example | |
|---|---|---|
| | 1 | 2 |
| Polymer | 100 | 100 |
| Seast 116 | 20 | 20 |
| TAIC | - | 2.8 |
| Perhexa 2.5B | - | 1.1 |
| Ca(OH)$_2$ | 4.2 | - |
| MgO | 2.1 | - |
| Sodium stearate | 0.9 | 0.9 |
| Potassium stearate | 0.09 | 0.09 |
| Sulfur | 0.09 | 0.09 |
| Naugard 445 | 0.5 | 0.5 |

Table 6

| vulcanization properties | Comparative Example | |
|---|---|---|
| | 1 | 2 |
| Max. viscosity (kgf) | 2.3 | 2.4 |
| Min. viscosity (kgf) | 0.2 | 0.13 |
| Induction time (min) | 0.3 | 2.0 |
| vulcan. time (min) | 16.5 | 12.0 |
| Tensile strength (kgf/cm$^2$) | 121 | 76 |
| Elongation (%) | 270 | 650 |
| Hardness (JIS A) | 74 | 68 |
| Specific gravity | 1.65 | 1.61 |
| Change in hardness by heating in air (175 °C, 1000 hr) | +27 | +24 |
| Torsion test at low temperature T$_{10}$ (°C) | -7 | -8.5 |
| Permanent set (150 °C, 70 hr) | 39.9 | 78.3 |

Examples 11 to 13

In 100 parts of the monomer listed in Table 7 were dissolved CQ and DMAEMA, each in an amount of 0.5 part, Dai-el G801 was uniformly dissolved in the proportion given in Table 7 in the monomer solution, and the acrylic monomer was polymerized by irradiation with light using $\alpha$ -Light. To 100 parts of the polymer obtained were added 20 parts of MT carbon, 4 parts of TAIC, 1.5 parts of Perhexa 2.5B, and Naugard 455 which was used in an amount of 0.6 part per 100 parts of the acrylic component. These ingredients were kneaded together, and the mixture was subjected to primary vulcanization at 160 °C for 10 minutes and then to secondary vulcanization at 180 °C for 4 hours to prepare sheets.

The vulcanized sheet was immersed at 40 °C for 70 hours in each of the mixtures of Fuel C and methanol in the ratios listed in Table 7 to determine the volume change resulting from the immersion. Table 7 shows the result. Fuel C is a mixture of isooctane and toluene (50:50 in volume ratio).

The vulcanized sheet obtained was also immersed in the solvents A and B given in Table 8 and mentioned below at 170 °C for 72 hours to determine the volume change and hardness ( JIS A Shore hardness) change resulting from the immersion. Table 8 shows the result.

A: JIS No.3 Oil

B: Nissan Extra Save (Engine oil, 7.5W-30)

### Table 7

| | Polymer | Monomer | Volume change (%) Fuel C/methanol | | | | |
|---|---|---|---|---|---|---|---|
| | | | 100/0 | 80/20 | 50/50 | 15/85 | 0/100 |
| Ex.11 | G801 (55) | nBuAc (40.5) 1G (4.5) | 39.8 | 60.3 | 66.8 | 56.7 | 48.1 |
| Ex.12 | G801 (70) | nBuAc (27) 1G (3) | 30.8 | 49.5 | 59.2 | 58.6 | 50.2 |
| Ex.13 | G801 (80) | nBuAc (18) 1G (2) | 20.7 | 26.1 | 25.2 | 16.0 | 10.4 |

### Table 8

| | | Ex.12 | Ex.13 |
|---|---|---|---|
| (A) | Volume change (%) | 12.7 | 4.9 |
| | Hardness change | 0 | −2 |
| (B) | Volume change (%) | 9.0 | 1.4 |
| | Hardness change | −2 | +4 |

## Claims

1. A crosslinkable composition characterized in that the composition comprises 100 parts by weight of a polymer, 0.1 to 100 parts by weight of a filler and 0.1 to 10 parts by weight of a crosslinking agent, the polymer being obtained by dissolving or swelling an amorphous fluorine-containing elastomer in an acrylic monomer and subsequently polymerizing the monomer into a high polymer.

2. A crosslinkable composition as defined in claim 1 wherein the amorphous fluorine-containing polymer is a copolymer containing vinylidene fluoride, fluoroalkene/olefin copolymer, fluoro(alkyl vinyl ether)/olefin copolymer, fluorosilicon rubber or fluorophosphazene rubber.

3. A crosslinkable composition as defined in claim 2 wherein the amorphous fluorine-containing polymer is a vinylidene fluoride/hexafluoropropylene copolymer, vinylidene fluoride/tetrafluoroethylene/hexafluoropropylene copolymer or vinylidene fluoride/chlorotrifluoroethylene copolymer.

4. A crosslinkable composition as defined in any one of claims 1-3, wherein 5 to 1000 its by eight of the acrylic monomer is used per 100 parts by weight of the amorphous fluorine-containing polymer.